# EUROPEAN PATENT SPECIFICATION

(11) **EP 2 219 907 B1**
(45) Date of publication and mention of the grant of the patent: **13.03.2013**
(21) Application number: 07861162.1
(22) Date of filing: 21.12.2007
(51) Int. Cl.: B60R 21/231, B60R 21/235

(54) **AN INFLATABLE AIR-BAG**
AUFBLASBARER AIRBAG
COUSSIN DE SÉCURITÉ GONFLABLE

(43) Date of publication of application: 25.08.2010
(73) Proprietor: Autoliv Development AB, 44783 Vårgårda (SE)
(72) Inventor: TIBELL, Daniel, S-461 41 Trollhättan (SE); AHO, Christian, S-46130 Trollhättan (SE)
(74) Representative: Beattie, Alex Thomas Stewart
(86) International application number: PCT/SE2007/051067
(87) International publication number: WO 2009/082305

(56) References cited:
- EP-A2- 1 574 404
- WO-A1-02/16174
- DE-A1- 4 040 096
- GB-A- 2 390 574
- US-A- 5 213 363
- US-A1- 2001 020 779
- US-A1- 2002 043 792

## Description

### Description of Invention

The present invention relates to an inflatable air-bag, and in particular an inflatable air-bag of the type intended to be used as a safety device in a motor vehicle.

The present invention is particularly directed towards an air-bag arrangement suitable for use in restraining the front-seat passenger of a motor vehicle. It is conventional for such passenger air-bags to be provided, in a packaged condition, within the dashboard of a motor vehicle, for inflation in an accident situation in order to restrain the front-seat passenger. Conventional passenger air-bags have an inflatable volume of between 130 and 150 litres which has been found to require a relatively large inflator, such as a gas-generator or the like. It is desirable, where possible, to reduce the inflatable volume of an air-bag, so that a lower volume of inflating gas is required in order to inflate the air-bag, thereby allowing the air-bag to be used with a smaller inflator which saves weight and also cost. However, great care must be taken when designing air-bags with a smaller inflatable volume, so as to provide an air-bag which is still effective in performing its restraining function.

GB2390574 discloses an air-bag which is formed from two super-imposed elements of fabric. Each element of fabric can take the form of a regular rectilinear polygon, with square or triangular elements of fabric most favoured. The corner regions of one said element of fabric are interdigitated with the corner regions of the other element of fabric, and the adjacent peripheral parts of the interdigitated corner regions are interconnected by means of a seam. The two elements of fabric are arranged so that the warp and weft yarns of one element of fabric are angularly off-set from the warp and weft yarns of the yarns and the two elements of fabric provide a desirable inflation characteristic.

The present invention seeks to provide an improved inflatable air-bag.

An air-bag in accordance with the present invention will be described below with reference to its intended orientation when deployed within a motor vehicle, and so all occurrences of the terms : upper, uppermost, lower, lowermost, top, bottom, side, front, forward, forwardmost, rear, rearward, rearmost, lateral, laterally, longitudinally, vertically etc. should be interpreted accordingly.

The present invention provides an inflatable air-bag comprising a front fabric panel and a rear fabric panel, said panels being interconnected around their peripheries by means of a seam; the air-bag being characterised in that the front panel is substantially kite-shaped and has a pair of substantially congruent edges terminating at a lowermost corner of the front panel, and wherein the air-bag is configured such that the lowermost corner of the front panel extends towards the rear of the air-bag when the air-bag is in an inflated condition, and the rear panel has a lowermost edge defining a re-entrant region, the re-entrant region being connected to the lowermost corner of the front panel by part of said seam, and the two lower edges of the front panel of the air-bag are longer than the upper side edges.

Conveniently, said panels are interconnected in an orientation such that the warp and weft yarns of the front panel are angularly off-set from the warp and weft yarns of the rear panel.

Preferably, the angle of off-set is between 25° and 65°.

Advantageously, the angle of off-set is 45°.

Conveniently, the rear-panel comprises two fabric elements which are interconnected by at least one seam.

Preferably, the rear panel comprises a lower fabric element and an upper fabric element, the lower fabric element having a curved uppermost edge defining a centrally located projection, and the upper fabric element having a curved lowermost edge defining a centrally located projection, said two projections being superimposed and said elements being interconnected by a pair of seams, each seam interconnecting portions of said two edges located on a respective side of said projections.

Advantageously, each said portion of said edges is substantially concave.

Conveniently, a respective gas-inlet aperture is provided through each said element in the region of the respective projection, said gas-inlet apertures being aligned with one another.

Preferably, at least one tear-seam is provided which initially interconnects the front and rear panels.

Advantageously, the or each tear-seam interconnects the front panel and the lower element of the rear-panel.

Conveniently, at least one said tear-seam extends laterally across part of the air-bag.

Preferably, at least one said tear-seam extends longitudinally across part of the air-bag.

Advantageously, the air-bag is provided in a folded configuration in which a lower region of the air-bag, comprising a lower region of the front panel and a lower region of the rear panel, is folded rearwardly, to define a folded part comprising four thicknesses of fabric.

Conveniently, said four thicknesses of fabric are stitched together by at least one substantially lateral tear-seam.

So that the invention may be more readily understood, and so that further features thereof may be further appreciated, an embodiment of the invention will now be described, by way of example, with reference to the accompanying drawings, in which :
Figure 1 is a plan view of a front panel of the air-bag;
Figure 2 is a plan view of an upper element forming part of a rear panel of the air-bag;
Figure 3 is a plan view of a lower element forming part of the rear panel of the air-bag;
Figure 4 is a plan view of a reinforcing element;
Figure 5 is a plan view of another reinforcing element;
Figure 6 is a plan view of a further reinforcing element;
Figure 7 is a plan view of a length of fabric showing a plurality of front panels being cut from it;
Figure 8 is a plan view of a length of fabric showing a plurality of the upper elements, lower elements and reinforcing elements being cut from it;
Figure 9 is a plan view of a length of fabric showing a plurality of the reinforcing elements illustrated in Figure 5 being cut from it;
Figure 10 is a plan view illustrating the upper and lower elements illustrated in

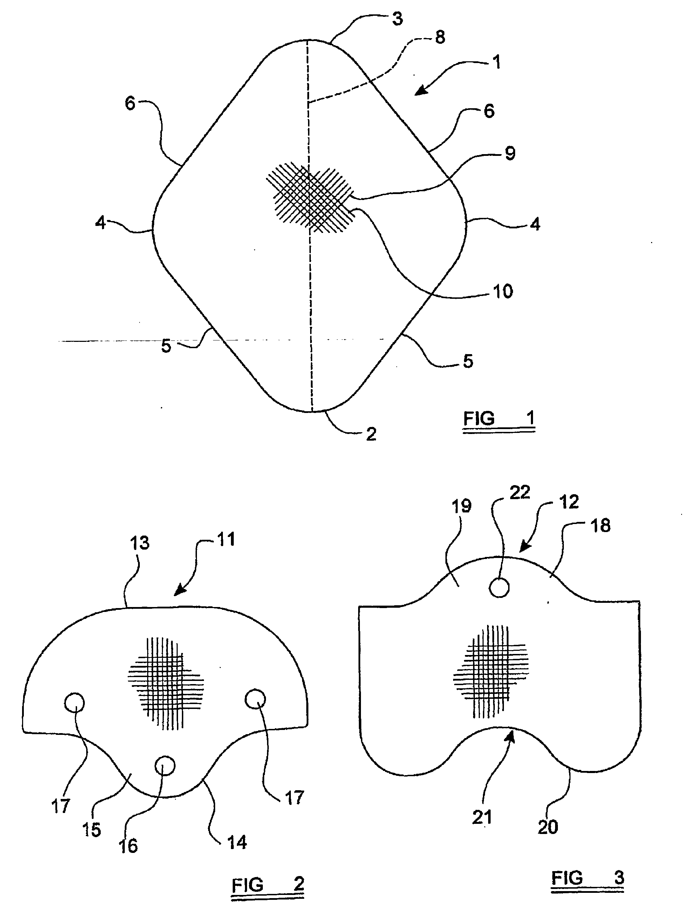

Figures 2 and 3 in overlying relation, showing an initial stage in the manufacture of the air-bag;

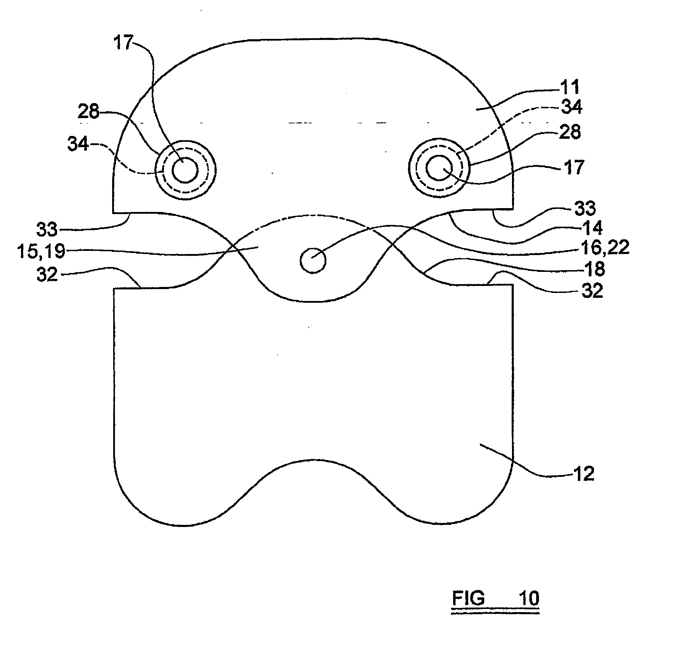

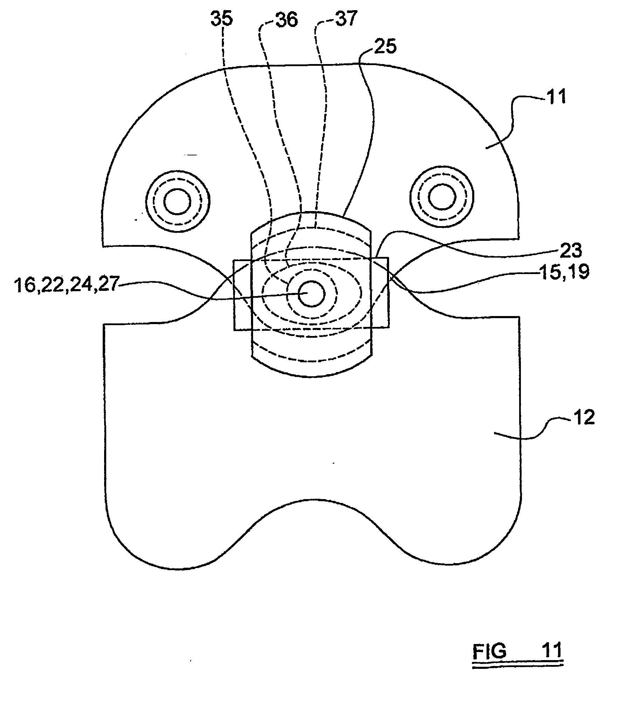

Figure 11 is a view corresponding generally to that of Figure 10, illustrating a subsequent stage in the manufacture of the air-bag;

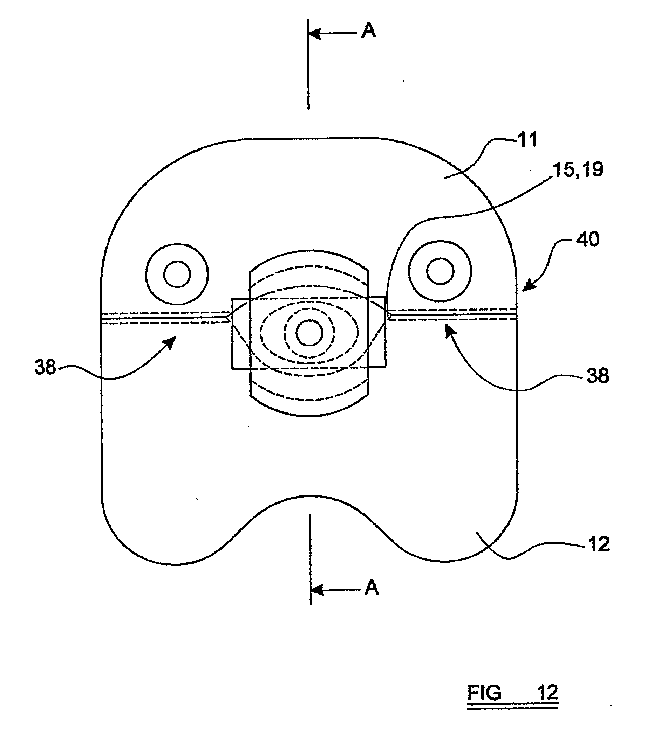

Figure 12 is a view corresponding generally to that of Figure 11, illustrating a further stage in the manufacture of the air-bag;

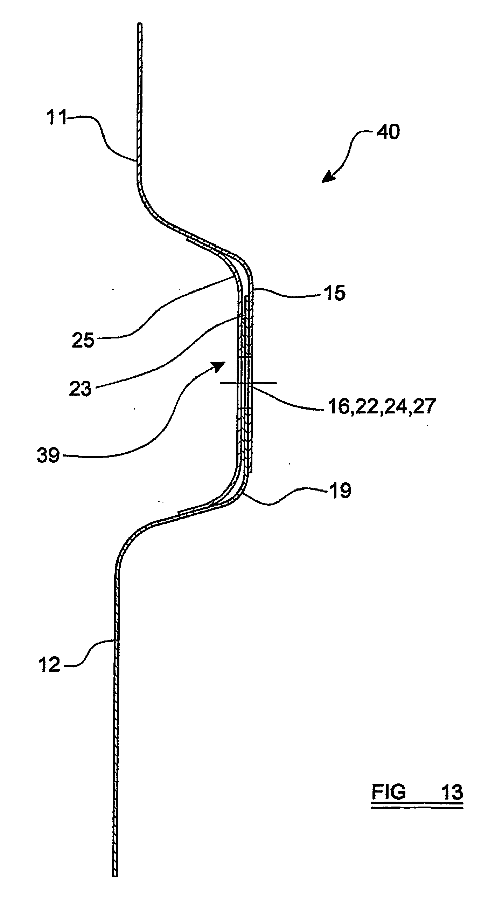

Figure 13 is a schematic cross-sectional view taken longitudinally along line A-A in Figure 12;

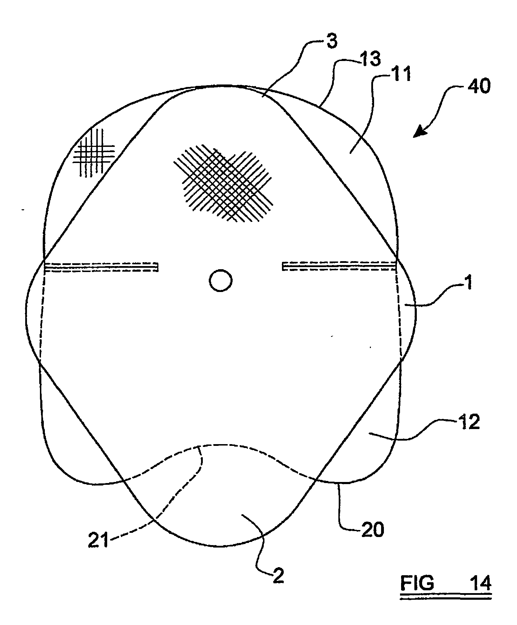

Figure 14 is a view corresponding generally to that of Figure 12, showing the front panel in overlying relation to the rear panel, during a subsequent stage in the manufacture of the air-bag;

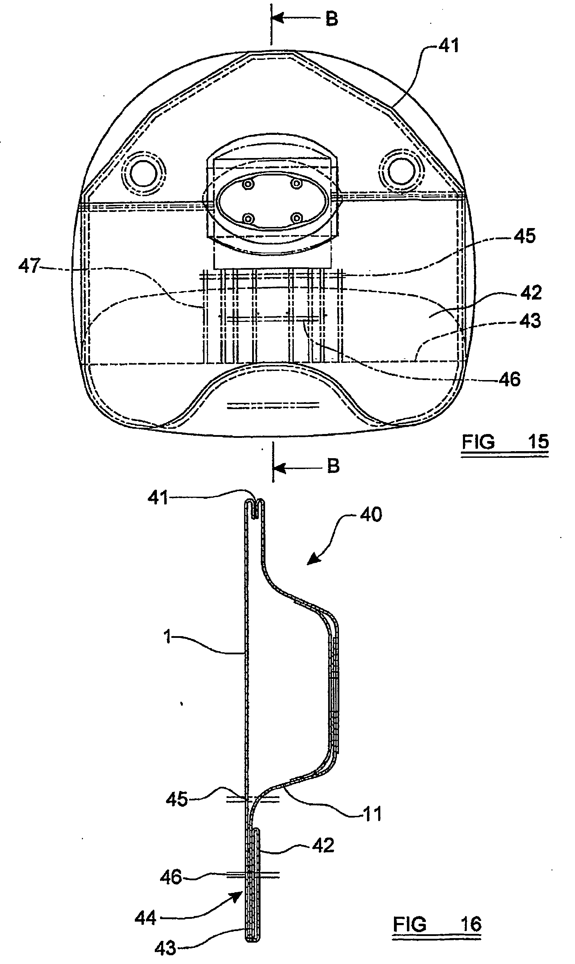

Figure 15 shows a still further stage in the manufacture of the air-bag;
Figure 16 is a cross-sectional view taken along line B-B of Figure 15;

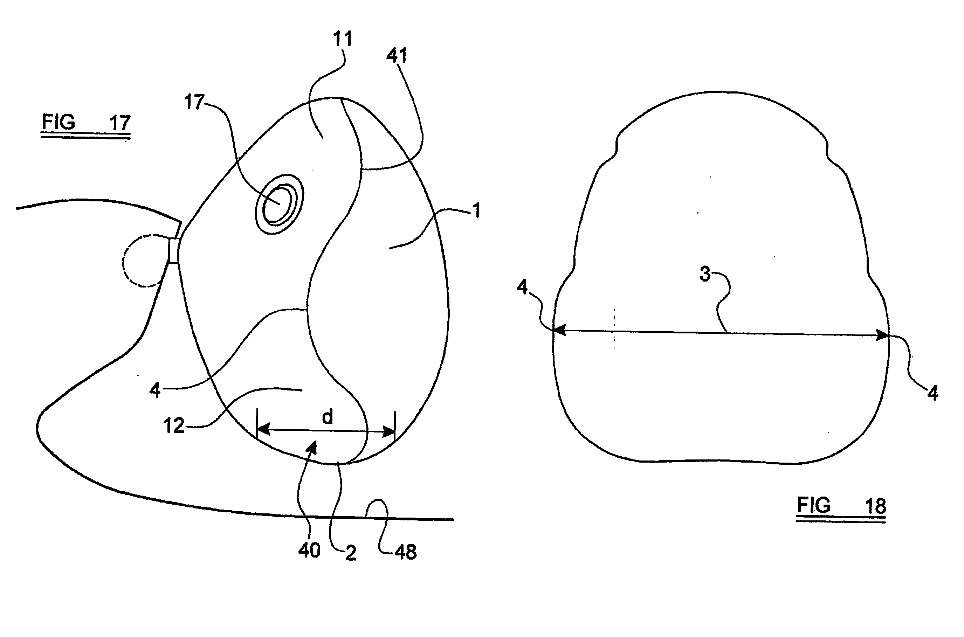

Figure 17 is a side view, illustrating an air-bag in accordance with the present invention in an inflated condition; and
Figure 18 is a front view, from the perspective of a motor vehicle passenger, illustrating the air-bag of the present invention in an inflated condition.

Turning now to consider the drawings in more detail, Figure 1 illustrates a front panel 1 which forms part of the structure of the air-bag of the present invention. The front panel 1 illustrated in Figure 1 is substantially rhombus-shaped and has rounded corners, namely a lowermost corner 2, an opposed uppermost corner 3, and a pair of opposed side corners 4.

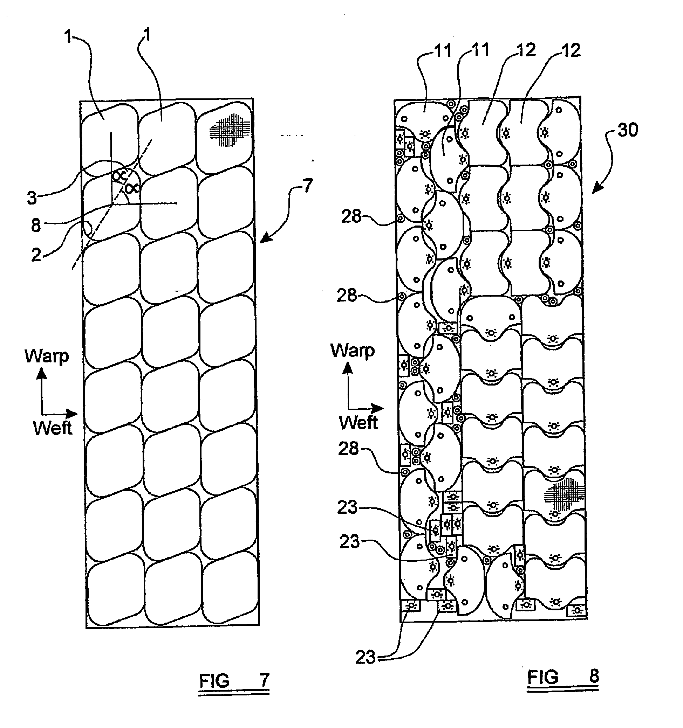

The rhombus-shaped front panel 1 has a pair of substantially congruent lower side-edges 5 terminating at the lowermost corner 2, and a pair of substantially congruent upper side-edges 6 terminating at the uppermost corner 3. With the front panel of Figure 1 being substantially rhombus-shaped, the upper side-edges 6 are substantially equal in length to the lower-side edges 5. However, it is to be appreciated that the present invention is not using a substantially rhombus-shaped front panel 1 as illustrated in Figure 1. In the invention, a front panel 1 is used in which the two lower side-edges 5 are longer than the upper side-edges 6. It should therefore be understood that the front panel of the air-bag of the present invention is required to be substantially kite-shaped (sometimes termed "deltoid"-shaped), it being understood that a kite (or deltoid) is a quadrilateral shape having two pairs of equal adjacent sides, meaning that a rhombus is simply a particular type of kite (or deltoid) in which all sides are of equal length. The front panel 1 is formed of fabric and is cut, for example using a laser cutting technique, from a larger length or roll of fabric 7 as illustrated in Figure 7. As can be seen from Figure 7, a plurality of front panels 1 are cut from a single roll or length of fabric 7 in a manner effective to minimise wastage or scrap.

The warp yarns of the roll or fabric 7 run longitudinally in the direction indicated schematically in Figure 7, whilst the weft yarns run transversely across the roll or length of fabric 7. It will be noted that each front panel 1 is cut from the roll or length of fabric 7 in an orientation in which a line 8 interconnecting the lowermost corner 2 and the uppermost corner 3 makes an angle α of substantially 45° with the warp and weft directions of the fabric. This means that when the fabric panel 1 is oriented as shown in Figure 1, with the line 8 arranged substantially vertically, the warp yarns 9 and the weft yarns 10 each make an angle of substantially 45° to the line 8.

Reference will now be made to Figures 2 and 3 which illustrate, respectively, an upper fabric element 11 and a lower fabric element 12 which, as will be described, are secured to one another to define a rear fabric panel of the air-bag. The upper element 11 has a substantially arcuate uppermost edge 13 and a substantially curved lowermost edge 14, the lowermost edge 14 being serpentine in form so as to define a centrally-located projection 15. A gas-inlet aperture 16 is formed through the fabric of the upper element 11, in the region of the projection 15, and a pair of vent apertures 17 are also provided through the fabric of the element, at positions remote from the projection 15.

The lower fabric element 12 is larger than the upper fabric element 11 and has a curved uppermost edge 18 which has substantially identical form to the lowermost edge 14 of the upper element 11, and thus also defines a centrally-located projection 19. The lowermost edge 20 of the lower fabric element 12 is also curved, and has a generally serpentine configuration so as to define a centrally-located re-entrant region 21. A gas-inlet aperture 22 is formed through the fabric of the lower element 12, in the region of the projection 19, the gas-inlet aperture 22 having substantially identical form to the gas-inlet aperture 16 formed through the fabric of the upper element 11.

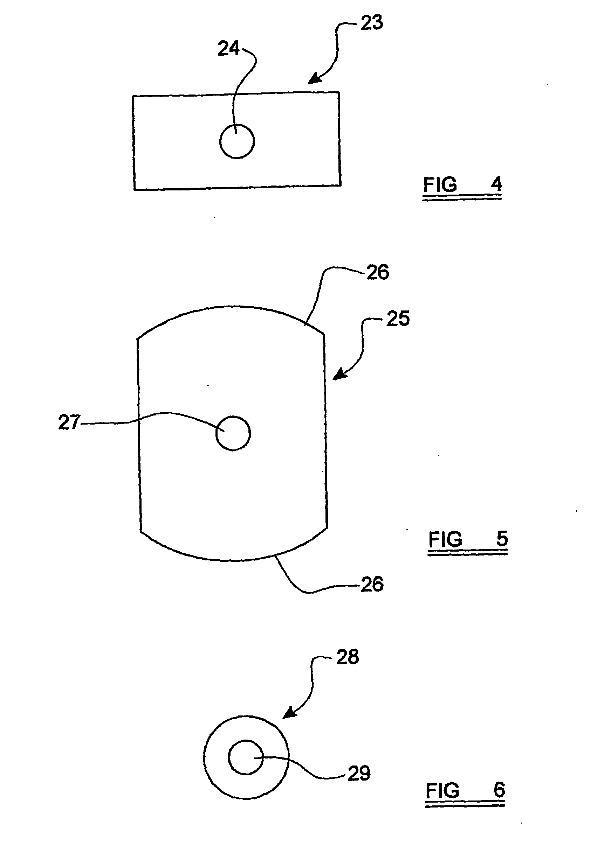

Figure 4 illustrates a first reinforcing element 23 which is formed from fabric material and is substantially rectangular in form. The first reinforcing element 23 is provided with a centrally-located gas-inlet aperture 24 of substantially identical form to the gas-inlet apertures 16 and 22.

Figure 5 illustrates a second reinforcing element 25 which is also formed from fabric material and is substantially rectangular in form, although its opposed shorter edges 26 are slightly arcuate. The second reinforcing element is also provided with a centrally-located gas-inlet aperture 27 having substantially identical form to the aforementioned gas-inlet apertures 16, 22 and 24.

Figure 6 illustrates a vent-reinforcing element 28 which is formed from fabric material and has a substantially annular configuration defining a central aperture 29. The central aperture 29 has substantially identical form to the two vent apertures 17 provided through the fabric of the upper element 11.

Figure 8 illustrates a roll or length of fabric 30 similar to that illustrated in Figure 7, having its warp yarns extending longitudinally and its weft yarns extending transversely. As illustrated, a plurality of the upper elements 11, the lower elements 12, the first reinforcing elements 23 and the vent reinforcing elements 28 are all cut, for example using the laser cutting technique, from the roll or length of fabric 30. All of the aforementioned elements are arranged in a tightly-packed relation to one another so as to limit wastage of the fabric 30. It is important, however, to note the orientation of the upper elements 11 and the lower elements 12 relative to the warp and weft directions illustrated schematically on Figure 8. It will be noted that some of the upper and lower elements 11, 12 are cut from the length of fabric 30 in the orientations illustrated in Figures 2 and 3, whilst other lower and upper elements 11, 12 are cut from the length of fabric 30 in orientations rotated 90° relative to the orientations illustrated in Figures 2 and 3. Thus, regardless of which orientation the upper and lower elements 11, 12 are cut from the length of fabric 30, when the upper and lower elements 11, 12 are arranged in the orientations illustrated in Figures 2 and 3, they will have yarns extending substantially vertically (either warp yarns or weft yarns), and yarns extending substantially horizontally (either weft yarns or warp yarns). It is to be noted that this is in contrast to the direction of the yarns of the front panel 1 in the orientation illustrated in Figure 1.

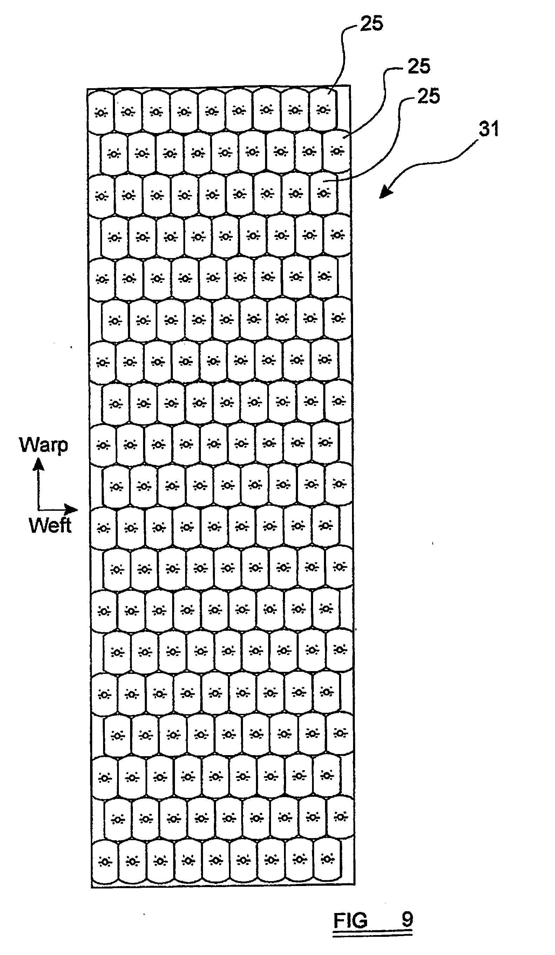

Figure 9 illustrates a further roll or length of fabric 31 from which a plurality of the second reinforcing elements 25 are cut in a densely-packed relation to one another so as to minimise wastage of the fabric material 31.

Reference will now be made to Figures 10 to 16 which illustrate steps in the manufacture of an air-bag in accordance with the present invention, from the aforementioned fabric components.

Referring initially to Figure 10, the lower fabric element 12 is laid flat, and the upper fabric element 11 is also laid flat, generally adjacent the lower element 12, but such that the projection 15 of the upper element 11 overlies the projection 19 of the lower element 12. The two fabric elements 11, 12 are arranged so that their respective gas-inlet apertures 16, 22 are aligned with one another. In this partially overlying position, it will be noted that two portions 32 of the uppermost edge 18 of the lower element 12 remain exposed, each said portion 32 being located on a respective side of the central projection 19. It is to be noted that the two exposed edge portions 32 are each substantially concave. Similarly, two portions 33 of the lowermost edge 14 of the upper element 11 remain exposed, each said edge portion 33 being located on a respective side of the central projection 15 and being substantially concave in form.

Figure 10 also illustrates a pair of the vent-reinforcing elements 28, each being stitched to the fabric of the upper element 11 by a respective line of stitching 34 so as to be positioned around a respective vent aperture 17. As will be appreciated, in the completed air-bag, the vent apertures 17 allow for the venting of inflating gas from the interior of the air-bag when it is inflated, and the reinforcing elements 28 serve to reinforce the fabric of the upper element 11 in the region of the vent apertures 17.

As illustrated in figure 11, the first and second reinforcing elements 23, 25 are then both placed in an overlying position over the projections 15, 19 such that the gas-inlet apertures 24, 27 of the reinforcing elements are aligned with one another and also with the gas-inlet apertures 16, 22 of the upper and lower fabric elements, 11, 12. A plurality of lines of stitching (illustrated schematically at 35, 36, 37) are then created to interconnect the two reinforcing elements 23, 25 and the two projections 15, 19, and also to interconnect the upper and lower ends of the second reinforcing element 25 with the upper and lower fabric panels 11,12. As will be appreciated, the two reinforcing elements 23, 25 serve to reinforce the fabric of the upper and lower elements 11, 12 in the region of the gas-inlet apertures 16, 22. The aligned gas-inlet apertures are intended to be connected to an inflator, such as a gas-generator, for inflation of the air-bag in an accident situation and these regions of the air-bag are thus subjected to an extremely aggressive flow of gas upon inflation of the air-bag. This reinforcement thus serves to protect the fabric of the upper and lower elements 11, 12 during inflation of the air-bag.

As illustrated in Figure 12, the concave edge portions 32 of the lower fabric element 12 are then connected to the respective opposing concave edge portions 33 of the upper fabric element 11 by respective lines of stitching to form seams 38 on either side of the superimposed projections 15, 19. Because of the initial concave profile of the exposed edge portions 32, 33, the seams 38 thus serve to impart a three-dimensional shape to the rear panel defined by the interconnected fabric elements 11, 12. This is illustrated most clearly in Figure 13 which is a transverse cross-sectional view taken along line A-A of Figure 12, where it can be seen that a protruding throat region has been created. The elongated nature of the throat 39 allows more effective deployment of the air-bag from an initially folded condition within a relatively compact air bag module, upon inflation of the air-bag.

When the fabrication of the rear panel 40 illustrated in Figures 12 and 13 has been completed, the rear panel is turned over such that the protruding throat 39 is on top, and then the front panel 1 is laid over the rear panel 40 as shown in Figure 14 such that its uppermost corner 3 is aligned with the central region of the arcuate uppermost edge 13 of the upper panel 11, and such that its lowermost corner 2 overlies the re-entrant region 21 of the lowermost edge 20 of the lower element 12. The front panel 1 and the rear panel 40 are then interconnected around their peripheries by a seam 41 (shown in Figure 15) which is created by a line of stitching, whereafter the resulting air-bag is turned inside-out so that the seam 41 is located inside the interior volume of the resulting air-bag (as shown most clearly in Figure 16).

Having regard to Figures 14 and 15, it should therefore be appreciated that the lowermost corner 2 of the front panel 1 is connected to the re-entrant region 21 of the lowermost edge 20 of the rear panel 40 by part of the peripheral seam 41. It will also be appreciated that the warp and weft yarns 9, 10 of the front panel 1 are angularly off-set from the warp and weft yarns of the rear panel 40, by an angle of approximately 45°.

As will be appreciated, the resulting air-bag must be packed into a relatively small air-bag module for installation within the dashboard of a motor vehicle. This is typically done by creating a plurality of rolls and/or folds in the air-bag. An initial fold is illustrated in Figures 15 and 16, from which it will be seen that a lower region 42 of the air-bag, comprising a lower region of the front panel 1 and a lower region of the rear panel 40 (i.e. including the interconnected lowermost corner 2 and re-entrant portion 21), is folded rearwardly about a transverse fold line 43. The resulting folded part 44 of the air-bag thus comprises four thicknesses of fabric.

As illustrated in Figures 15 and 16, a pair of tear-seams 45, 46 are provided in spaced-apart relation, both of which extend laterally across part of the air-bag. The upper lateral tear-seam 45 interconnects the front panel 1 and the lower fabric element 11 of the rear panel 40 at a position slightly above the folded part 44 of the air-bag. The lower lateral tear-seam 46 interconnects the four thicknesses of fabric present in the folded part 44 of the air-bag. Both tear-seams 45, 46 are defined by lines of stitching having a relatively low mechanical strength compared to the yarns of the air-bag fabric, so as to rupture during inflation of the air-bag.

Additionally, as shown in Figure 15, the air-bag may be provided with a plurality of longitudinally-arranged tear-seams 47, each serving to interconnect the front panel 1 with the lower fabric element 11 of the rear panel 40 in a similar manner to the upper lateral tear-seam 45.

When the aforementioned tear-seams have all been created, the resulting air-bag can be folded and/or rolled into a conveniently-sized package for insertion into an air-bag housing.

As the air-bag is inflated by the injection of a large volume of gas through the air-inlet aperture, the folded and/or rolled air-bag package begins to open up. Due to the presence of the tear-seams 45, 46, 47, the lower region of the air-bag resists significant inflation during the early stages of deployment which offers significant advantages, known *per se,* in preventing injury to a motor vehicle passenger who may be sitting out of his or her normal position. However, as inflation of the air-bag continues, the relatively low strength of the tear-seams 45, 46, 47 will be overcome, at which time the lower part of the air-bag will then inflate so as to offer good protection to the lower region of the occupant's torso.

Figure 17 illustrates the air-bag in a substantially fully-inflated condition. From this drawing, it will be seen that the peripheral seam 41 which interconnects the front panel 1 and the rear panel 40 adopts a serpentine configuration. This is due to the different profiles of the front and rear panels 1, 40, as best illustrated in Figure 14. It is important to note from Figure 17 that because the lowermost corner 2 of the front panel 1 is connected to the re-entrant region 21 of the lowermost edge of the rear panel 40, in the substantially fully-inflated condition the lowermost region of the front panel 1 extends generally rearwardly so as to face the floor 48 of the motor vehicle. This gives the air-bag a substantial depth d in its lowermost region which, despite the function of the tear-seams, ensures that the lowermost region of the air-bag couples to the abdomen of the occupant relatively quickly in order to prevent the occupant from "submarining" (i.e. moving with a forwards and downwards motion underneath the air-bag), whilst also ensuring proper rotation of the occupant's torso in order to prevent significant injury.

Figure 18 illustrates the profile of the substantially fully-inflated air-bag from the point of view of an occupant in the motor vehicle, and it will be seen that the air-bag has its greatest width w in a lower region extending between the two side corners 4 of the front panel 1, whilst being relatively narrow in its upper region. It should thus be understood that by using a substantially kite-shaped front panel, and most preferably the rhombus-shaped panel illustrated in the drawings, an effective passenger air-bag can be created which has significantly reduced volume compared to that of more conventional air-bag configurations. A preferred embodiment of the present invention provides an air-bag having a maximum volume of approximately 100 litres, which compares very favourably to the more normal capacity of passenger air-bags which is 130-150 litres.

As will be appreciated from consideration of Figure 17, the serpentine configuration of the interconnecting seam 41 in the fully-inflated air-bag, which results from the front and rear panels 1, 40 having significantly different profiles, means that significant tensile forces are applied to the seam. However, the angular offset between the yarns of the front panel 1 and the yarns of the rear panel 40 serves to distribute these forces more evenly because it allows the yarns of the fabric to move in response to the inflation forces, thereby taking up some of the force applied on the seam 41. The angular offset between the yarns of the front and rear panels thus serves to distribute inflation forces, which would otherwise be concentrated on the interconnecting seam 41, more evenly.

Whilst the present invention has been described above with reference to a particular embodiment, it should be appreciated that certain modifications or alterations could be made to the air-bag, without departing from the scope of the invention defined by the appended claims. For example, although the embodiment described above is configured so that the yarns of the front panel 1 are offset relative to the yarns of the rear panel 40 by an angle of substantially 45°, variants of the invention are envisaged which could have an angle of offset of between 25° and 65°. It should be appreciated that in order to vary the angle of offset, the orientation of the front panels 1 indicated on the roll or length of fabric 7 shown in Figure 7 would need to be changed in order to adjust the orientation of the warp and weft yarns of each front panel 1. Whilst this is of course clearly possible, and could conceivably offer advantages in terms of the inflation characteristic of the resulting air-bag, it will be appreciated that the front panels 1 cannot be so densely packed within the roll or length of fabric 7, thus resulting in slightly increased wastage of the fabric material during the initial cutting stages.

When used in this specification and claims, the terms "comprises" and "comprising" and variations thereof mean that the specified features, steps or integers are included. The terms are not to be interpreted to exclude the presence of other features, steps or components.

## Claims

1. An inflatable air-bag comprising a front fabric panel (1) and a rear fabric panel (40), said panels being interconnected around their peripheries by means of a seam (41); the air-bag being **characterised in that** the front pane! (1) is substantially kite-shaped and has a pair of substantially congruent edges (5) terminating at a lowermost corner (2) of the front panel, and wherein the air-bag is configured such that the lowermost corner (2) of the front panel (1) extends towards the rear of the air-bag when the air-bag is in an inflated condition, the rear panel (40) has a lowermost edge (20) defining a re-entrant region (21), the re-entrant region (21) being connected to the corner (2) of the front panel (1) by part of said seam (40), and the two lower edges of the front panel of the air-bag are longer than the upper side edges.

2. An air-bag according to any preceding claim, wherein said panels (1,40) are interconnected in an orientation such that the warp and weft yarns (9,10) of the front panel (1) are angularly off-set from the warp and weft yarns of the rear panel (40).

3. An air-bag according to claim 2, wherein the angle (α) of off-set is between 25º and 65º.

4. An air-bag according to claim 3, wherein the angle (α) of off-set is 45º.

5. An air-bag according to any preceding claim, wherein the rear-panel (40) comprises two fabric elements (11,12) which are interconnected by at least one seam (38).

6. An air-bag according to claim 6, wherein the rear panel (40) comprises a lower fabric element (12) and an upper fabric element (11), the lower fabric element (12) having a curved uppermost edge (18) defining a centrally located projection (19), and the upper fabric element (12) having a curved lowermost edge (14) defining a centrally located projection (15), said two projections being superimposed and said elements (11, 12) being interconnected by a pair of seams (38), each seam (38) interconnecting portions (32,33) of said two edges located on a respective side of said projections (15,19).

7. An air-bag according to claim 6, wherein a respective gas-inlet aperture (16,22) is provided through each said element (11,12) in the region of the respective projection (15,19), said gas-inlet apertures (16,22) being aligned with one another.

8. An air-bag according to any preceding claim, wherein at least one tear-seam (45, 46, 47) is provided which initially interconnects the front and rear panels (1,40).

9. An air-bag according to claim 8, and including the features of claim 8, wherein the or each tear-seam (45,47) interconnects the front panel (1) and the lower element (12) of the rear-panel (40).

10. An air-bag according to claim 8 or claim 9, wherein at least one said tear-seam (45,46) extends laterally across part of the air-bag.

11. An air-bag according to any one of claims 8 to 10, wherein at least one said tear-seam (47) extends longitudinally across part of the air-bag.

12. An air-bag according to any preceding claim, provided in a folded configuration in which a lower region (42) of the air-bag, comprising a lower region of the front panel (1) and a lower region of the rear panel (40), is folded rearwardly, to define a folded part (44) comprising four thicknesses of fabric.

13. An air-bag according to claim 12, wherein said four thicknesses of fabric are stitched together by at least one substantially lateral tear-seam (46).

## Patentansprüche

1. Aufblasbarer Airbag, umfassend eine vordere Stoffbahn (1) und eine hintere Stoffbahn (40), wobei die Bahnen um ihren Umfang herum mittels einer Naht (41) miteinander verbunden sind; wobei der Airbag **dadurch gekennzeichnet ist, dass** die vordere Bahn (1) im Wesentlichen drachenviereckförmig ist und ein Paar von im Wesentlichen deckungsgleichen Rändern (5) aufweist, die an einer untersten Ecke (2) der vorderen Bahn enden, und wobei der Airbag derart eingerichtet ist, dass sich die unterste Ecke (2) der vorderen Bahn (1) zur Rückseite des Airbags hin erstreckt, wenn sich der Airbag in einem aufgeblasenen Zustand befindet, die hintere Bahn (40) einen untersten Rand (20) aufweist, der einen zurückspringenden Bereich (21) definiert, wobei der zurückspringende Bereich (21) mit der Ecke (2) der vorderen Bahn (1) durch einen Teil der Naht (40) verbunden ist, und die beiden unteren Ränder der vorderen Bahn des Airbags länger sind als die oberen Seitenränder.

2. Airbag nach einem vorhergehenden Anspruch, wobei die Bahnen (1, 40) in einer derartigen Ausrichtung miteinander verbunden sind, dass die Kett- und Schussfäden (9, 10) der vorderen Bahn (1) unter einem Winkel zu den Kett- und Schussfäden der hinteren Bahn (40) versetzt sind.

3. Airbag nach Anspruch 2, wobei der Versetzungswinkel (α) zwischen 25° und 65° liegt.

4. Airbag nach Anspruch 3, wobei der Versetzungswinkel (α) 45° beträgt.

5. Airbag nach einem vorhergehenden Anspruch, wobei die hintere Bahn (40) zwei Stoffelemente (11, 12) umfasst, die durch mindestens eine Naht (38) miteinander verbunden sind.

6. Airbag nach Anspruch 6, wobei die hintere Bahn (40) ein unteres Stoffelement (12) und ein oberes Stoffelement (11) umfasst, wobei das untere Stoffelement (12) einen gebogenen obersten Rand (18) aufweist, der einen mittig angeordneten Vorsprung (19) definiert, und das obere Stoffelement (12) einen gebogenen untersten Rand (14) aufweist, der einen mittig angeordneten Vorsprung (15) definiert, wobei die beiden Vorsprünge übereinanderliegen und die Elemente (11, 12) durch ein Paar von Nähten (38) miteinander verbunden sind, wobei jede Naht (38) Abschnitte (32, 33) der beiden Ränder miteinander verbindet, die auf einer jeweiligen Seite der Vorsprünge (15, 19) befindlich sind.

7. Airbag nach Anspruch 6, wobei eine jeweilige Gaseinlassöffnung (16, 22) durch jedes Element (11, 12) hindurch in dem Bereich des jeweiligen Vorsprungs (15, 19) vorgesehen ist, wobei die Gaseinlassöffnungen (16, 22) nacheinander ausgerichtet sind.

8. Airbag nach einem vorhergehenden Anspruch, wobei mindestens eine Reißnaht (45, 46, 47) vorgesehen ist, die zu Beginn die vordere und hintere Bahn (1, 40) miteinander verbindet.

9. Airbag nach Anspruch 8 und die Merkmale von Anspruch 8 aufweisend, wobei die oder jede Reißnaht (45, 47) die vordere Bahn (1) und das untere Element (12) der hinteren Bahn (40) miteinander verbindet.

10. Airbag nach Anspruch 8 oder Anspruch 9, wobei mindestens eine Reißnaht (45, 46) seitlich über einen Teil des Airbags verläuft.

11. Airbag nach einem der Ansprüche 8 bis 10, wobei mindestens eine Reißnaht (47) längs über einen Teil des Airbags verläuft.

12. Airbag nach einem vorhergehenden Anspruch, vorgesehen in einer zusammengefalteten Anordnung, in der ein unterer Bereich (42) des Airbags, der einen unteren Bereich der vorderen Bahn (1) und einen unteren Bereich der hinteren Bahn (40) umfasst, nach hinten gefaltet ist, um einen gefalteten Teil (44) zu definieren, der vier Lagen Stoff umfasst.

13. Airbag nach Anspruch 12, wobei die vier Lagen Stoff mit mindestens einer im Wesentlichen seitlichen Reißnaht (46) zusammengenäht sind.

## Revendications

1. Coussin de sécurité gonflable comprenant un panneau de tissu avant (1) et un panneau de tissu arrière (40), lesdits panneaux étant interconnectés autour de leur périphérie au moyen d'une couture (41) ; le coussin de sécurité étant **caractérisé en ce que** le panneau de tissu avant (1) est essentiellement en forme de cerf-volant et présente une paire de bords essentiellement congruents (5) se terminant dans un coin le plus bas (2) du panneau avant, et dans lequel le coussin de sécurité est configuré de sorte que le coin le plus bas (2) du panneau avant (1) s'étend vers l'arrière du coussin de sécurité quand le coussin de sécurité est dans un état gonflé, le panneau arrière (40) présente un bord le plus bas (20) définissant une zone rentrante (21), la zone rentrante (21) étant connectée au coin (2) du panneau avant (1) par une partie de ladite couture (40), et les deux bords inférieurs du panneau avant du coussin de sécurité sont plus longs que les bords des côtés supérieurs.

2. Coussin de sécurité selon une quelconque revendication précédente, dans lequel lesdits panneaux (1, 40) sont interconnectés dans une orientation telle que les fils de chaîne et de trame (9, 10) du panneau avant (1) sont décalés de manière angulaire par rapport aux fils de chaîne et de trame du panneau arrière (40).

3. Coussin de sécurité selon la revendication 2, dans lequel l'angle (α) de décalage est entre 25° et 65°.

4. Coussin de sécurité selon la revendication 3, dans lequel l'angle (α) de décalage est de 45°.

5. Coussin de sécurité selon une quelconque revendication précédente, dans lequel le panneau arrière (40) comprend deux éléments de tissu (11, 12) qui sont interconnectés par au moins une couture (38).

6. Coussin de sécurité selon la revendication 6, dans lequel le panneau arrière (40) comprend un élément de tissu inférieur (12) et un élément de tissu supérieur (11), l'élément de tissu inférieur (12) présentant un bord le plus haut courbé (18) définissant une saillie (19) placée de manière centrale, et l'élément de tissu supérieur (12) présentant un bord le plus bas courbé (14) définissant une saillie (15) placée de manière centrale, lesdites deux saillies étant superposées et lesdits éléments (11, 12) étant interconnectés par une paire de coutures (38), chaque couture (38) interconnectant des parties (32, 33) desdits deux bords situées d'un côté respectif desdites saillies (15, 19).

7. Coussin de sécurité selon la revendication 6, dans lequel une ouverture d'entrée de gaz (16, 22) respective est prévue à travers chaque élément (11, 12) dans la zone de la saillie (15, 19) respective, lesdites ouvertures d'entrée de gaz (16, 22) étant alignées l'une à l'autre.

8. Coussin de sécurité selon une quelconque revendication précédente, dans lequel au moins une ligne de rupture (45, 46, 47) est prévue qui interconnecte initialement les panneaux avant et arrière (1, 40).

9. Coussin de sécurité selon la revendication 8, et comportant les caractéristiques de la revendication 8, dans lequel la ou chaque ligne de rupture (45, 47) interconnecte le panneau avant (1) et l'élément inférieur (12) du panneau arrière (40).

10. Coussin de sécurité selon la revendication 8 ou la revendication 9, dans lequel au moins une dite ligne de rupture (45, 46) s'étend latéralement à travers une partie du coussin de sécurité.

11. Coussin de sécurité selon l'une quelconque des revendications 8 à 10, dans lequel au moins une dite ligne de rupture (47) s'étend longitudinalement à travers une partie du coussin de sécurité.

12. Coussin de sécurité selon une quelconque revendication précédente, prévu dans une configuration pliée dans laquelle une zone inférieure (42) du coussin de sécurité, comprenant une zone inférieure du panneau avant (1) et une zone inférieure du panneau arrière (40), est pliée vers l'arrière, pour définir une partie pliée (44) comprenant quatre épaisseurs de tissu.

13. Coussin de sécurité selon la revendication 12, dans lequel lesdites quatre épaisseurs de tissu sont cousues ensemble par au moins une ligne de rupture (46) essentiellement latérale.
